# FASCICULE DE BREVET EUROPEEN

(11) **EP 2 139 576 B1**
(45) Date de publication et mention de la délivrance du brevet: **12.12.2012**
(21) Numéro de dépôt: 08788211.4
(22) Date de dépôt: 21.04.2008
(51) Int. Cl.: B01D 19/00, E21B 43/36

(54) **DISPOSITIF DE SEPARATION LIQUIDE/GAZ ET PROCEDE DE SEPARATION LIQUIDE/GAZ, NOTAMMENT LES PHASES LIQUIDE ET GAZEUSE D'UN PETROLE BRUT**
FLÜSSIGKEITS-/GASTRENNUNGSVORRICHTUNG UND FLÜSSIGKEITS-/GASTRENNUNGSVERFAHREN, INSBESONDERE FÜR ROHÖL-FLÜSSIG- UND GASPHASEN
LIQUID/GAS SEPARATION DEVICE AND LIQUID/GAS SEPARATION METHOD, IN PARTICULAR FOR CRUDE OIL LIQUID AND GASEOUS PHASES

(30) Priorité: 26.04.2007 FR 0754714
(43) Date de publication de la demande: 06.01.2010
(73) Titulaire: Saipem SA, 78180 Montigny-le-Bretonneux (FR)
(72) Inventeur: ABRAND, Stéphanie, F-78640 NEAUPHLE LE CHATEAU (FR); BONNISSEL, Marc, F-13600 Ceyreste (FR); DI SILVESTRO, Roberto, I-20050 Macherio (MI) (IT); HALLOT, Raymond, F-13500 Martigues (FR)
(74) Mandataire: Domange, Maxime
(86) Numéro de dépôt international: PCT/FR2008/050713
(87) Numéro de publication internationale: WO 2008/142344

(56) Documents cités:
- EP-A- 0 096 636
- FR-A- 2 528 106
- GB-A- 2 101 496
- US-A- 4 793 418

## Description

La présente invention a pour objet un séparateur liquide/gaz de type vertical ainsi qu'un procédé de séparation de fluide polyphasique, notamment d'huile-eau et de gaz contenus dans du pétrole brut.

Le secteur technique de l'invention est plus particulièrement le domaine de la production pétrolière, et plus particulièrement le domaine des champs de pétrole en mer par grande profondeur.

La production de pétrole en mer profonde est réalisée en général à partir d'un support flottant ancré à proximité des puits de pétrole situés au niveau du fond de la mer, c'est-à-dire à des profondeurs variables de 1000 à 2500m, voire plus. Le support flottant comporte en général des moyens d'ancrage pour rester en position malgré les effets des courants, des vents et de la houle. Il comporte aussi en général des moyens de stockage et de traitement du pétrole ainsi que des moyens de déchargement vers des pétroliers enleveurs, ces derniers se présentant à intervalle régulier pour effectuer l'enlèvement de la production. L'appellation courante de ces supports flottants est le terme anglo-saxon "Floating Production Storage Offloading" (signifiant "moyen flottant de stockage, de production et de déchargement") dont on utilise le terme abrégé "FPSO" dans l'ensemble de la description suivante.

Les têtes de puits sont en général reliées audit FPSO par des conduites sous-marines soit de type SCR, c'est-à-dire conduites suspendues en configuration de chaînette, soit de type tour hybride comprenant :
- un riser vertical dont l'extrémité inférieure est ancrée au fond de la mer et relié à une dite conduite reposant au fond de la mer, et l'extrémité supérieure est tendue par un flotteur immergé en subsurface auquel elle est reliée, et
- une conduite de liaison, en général une conduite de liaison flexible, entre l'extrémité supérieure dudit riser et un support flottant en surface, ladite conduite de liaison flexible prenant, le cas échéant, de par son propre poids la forme d'une courbe en chaînette plongeante, c'est-à-dire descendant largement en dessous du flotteur pour remonter ensuite jusqu'audit support flottant.

L'intégralité de la production de pétrole brut est ainsi en général remontée à bord du FPSO pour y être traitée en vue de séparer le pétrole proprement dit, de l'eau, du gaz, et d'éventuels composants sablonneux. Le pétrole, une fois séparé, est ainsi stocké à bord, le gaz est lavé, puis envoyé vers les turbines à gaz pour la production de l'électricité et de la chaleur nécessaire à bord, puis le surplus est réinjecté dans le réservoir du champ pétrolier de manière à remettre en pression ledit réservoir. L'eau, après avoir été libérée du sable en suspension, est enfin soit rejetée à la mer après extraction poussée de toute particule d'huile, soit réinjectée elle aussi dans le réservoir, un complément d'eau de mer prélevé en sub-surface, venant en général en complément, pour atteindre le débit nécessaire d'injection d'eau dans le réservoir. Le sable extrait, qui ne représente que des quantités minimes, est finalement lavé puis rejeté en mer.

On connaît la méthode de séparation des gaz, eau et huile de pétrole brut couramment employée sur les installations fixes à terre qui consiste à utiliser de réservoirs de très grands volumes, en général de forme cylindrique allongée, le pétrole brut entrant à une extrémité et cheminant le long dudit réservoir pendant une durée de l'ordre de 5-10 mn durant lesquelles les diverses phases se séparent naturellement par gravité pour atteindre la seconde extrémité. Le gaz est alors récupéré en partie haute du réservoir, l'eau et le sable en partie basse, et le pétrole (huile) en partie intermédiaire. Il existe une très grande variété de séparateurs de ce type qui intègrent en général des dispositifs complémentaires internes, tels des écrans horizontaux, verticaux ou obliques, dont l'objet est de faciliter la séparation des phases et éviter qu'ils ne se re-mélangent à une étape ultérieure.

Ces séparateurs fonctionnent à basse pression, par exemple 3-10 bars, parfois même en dépression, de manière à optimiser le dégazage du pétrole brut. Si l'on souhaite installer ce type de séparateur au fond de la mer, le réservoir doit être capable de résister à l'implosion sous l'effet de la pression qui est sensiblement de 100 bars, soit sensiblement 10MPa par tranche de 1000m d'eau. Ainsi la transposition d'un tel réservoir pour son utilisation en grande et très grande profondeur nécessiterait des épaisseurs de paroi de 100 à 150mm pour résister à l'implosion et de tels éléments de chaudronnerie seraient très délicats et très coûteux à réaliser et à installer au fond de la mer à grande profondeur.

Un dispositif de séparation liquide/gaz est divulgué dans US-A-4 793 418. Il contient un premier réservoir de forme allongée à section circulaire dont les extrémités inférieure et supérieure sont disposées verticalement. Un second réservoir est relié au premier réservoir d'une part par une conduite inclinée pour la phase liquide et d'autre part par une deuxième conduite pour la phase gazeuse.

Un but de la présente invention est de fournir un dispositif de séparation gaz/liquide amélioré apte à être installé et fonctionner au fond de la mer à grande profondeur, notamment au moins 1000m, qui soit plus simple et moins coûteux à réaliser, installer et mettre en oeuvre au fond de la mer.

Pour ce faire, la présente invention fournit un dispositif de séparation liquide/gaz de deux phases respectivement liquide et gazeuse d'un fluide, notamment les phases liquide et gazeuse d'un pétrole brut, comprenant au moins un premier réservoir de forme allongée à section circulaire dont les extrémités inférieure et supérieure sont, de préférence encore, en forme de calotte sphérique partielle, de type cigare, disposé verticalement, caractérisé en ce que :
a) ledit premier réservoir comprend une paroi équipée de :
   - un premier orifice inférieur, à son extrémité inférieure, relié à une conduite d'arrivée dudit fluide, et comprenant un dispositif de baisse de pression et, de préférence, une vanne de contrôle du débit de fluide en amont,
   - au moins un premier orifice supérieur, à son extrémité supérieure, et
   - une pluralité de premiers orifices intermédiaires, et
b) ledit premier réservoir étant relié à une pluralité de seconds réservoirs par une pluralité de premières conduites de transfert et au moins une deuxième conduite de transfert,
   - lesdits seconds réservoirs étant également de forme allongée à section circulaire dont les extrémités inférieure et supérieure sont, de préférence encore, en forme de calotte sphérique partielle, de type cigare, et disposés verticalement,
c) lesdits seconds réservoirs comprenant chacun :
   - un deuxième orifice supérieur, à leur extrémité supérieure, relié à une même conduite d'évacuation de gaz, et
   - un deuxième orifice intermédiaire disposé en contrebas par rapport audit premier orifice intermédiaire, auquel il est relié par une dite première conduite de transfert inclinée, et un deuxième orifice inférieur, à son extrémité inférieure, relié à une même conduite d'évacuation de fluide dégazé, comprenant en aval une pompe d'export apte à soutirer ledit fluide dégazé à l'extrémité inférieure desdits seconds réservoirs, et
d) ledit premier orifice supérieur dudit premier réservoir étant relié par au moins une deuxième conduite de transfert à au moins un troisième orifice intermédiaire d'au moins un dit deuxième réservoir, ledit troisième orifice intermédiaire étant situé au-dessus dudit deuxième orifice intermédiaire du même dit deuxième réservoir.

Le positionnement vertical et la forme desdits réservoirs leur confèrent une bonne résistance à la pression hydrostatique au fond de la mer, permettant de mettre en oeuvre des parois de réservoir de seulement 20 à 30 mm d'épaisseur.

On comprend que le flux de pétrole brut remplissant le premier réservoir, c'est-à-dire montant à l'intérieur du premier réservoir, permet un premier dégazage pendant la montée. Puis, le fluide partiellement dégazé s'écoulant vers le bas à l'intérieur des deuxièmes réservoirs, permet également un dégazage complémentaire.

La division du flux de fluide, depuis ledit premier réservoir jusqu'à la pluralité desdits seconds réservoirs, permet de déverser, dans lesdits réservoirs le fluide déjà partiellement dégazé, mais contenant encore du gaz, de manière à ce qu'il s'écoule à débit et vitesse réduits dans lesdits deuxièmes réservoirs, en descendant vers leurs extrémités inférieures, c'est-à-dire à une vitesse moindre que la vitesse de remplissage et montée du fluide dans ledit premier réservoir. Ceci permet de donner davantage de temps au gaz résiduel de s'échapper du fluide partiellement dégazé, et donc de favoriser un dégazage complémentaire à l'intérieur desdits seconds réservoirs.

La partie supérieure dudit premier réservoir, au-dessus desdits premiers orifices intermédiaires, crée un volume libre rempli de gaz qui permet d'amortir et, donc, de maîtriser les éclats et projection de fluide qui peuvent intervenir lorsque, en pénétrant à l'extrémité inférieure dudit premier réservoir, certaines poches de gaz ("slug") s'expansent brutalement en réalisant des projections violentes de liquide à l'intérieur dudit premier réservoir.

La deuxième conduite de transfert entre l'extrémité supérieure du premier réservoir, permet de récupérer le gaz à l'extrémité supérieure desdits seconds réservoirs, tout en permettant, le cas échéant, au liquide ayant atteint l'extrémité supérieure du premier réservoir, suite auxdites projections dues aux poches de gaz, d'être redirigées vers l'intérieur desdits seconds réservoirs pour y subir une séparation liquide/gaz. Ledit troisième orifice intermédiaire est situé au-dessus, de préférence à proximité dudit deuxième orifice intermédiaire du second réservoir, de manière à ne pas interférer avec le pétrole brut en cours de dégazage, et de ne pas perturber la remontée des gaz au sein du dit second réservoir.

Dans un mode préféré de réalisation, le dispositif de séparation, selon l'invention, comprend un dispositif de contrôle du niveau du fluide à l'intérieur d'un dit réservoir, de préférence à l'intérieur d'un dit second réservoir, qui permet de commander une dite vanne de contrôle du débit de fluide en amont dudit premier orifice inférieur du premier réservoir et/ou une dite pompe d'export de fluide dégazé en aval des dits deuxièmes orifices inférieurs des seconds réservoirs.

Ce dispositif de contrôle de niveau qui peut être par exemple une sonde de type radar ou sonar, permet d'assurer que le niveau de fluide à l'intérieur dudit premier réservoir arrive au moins jusqu'au niveau desdits premiers orifices intermédiaires, de manière à ce que le fluide puisse s'écouler à l'intérieur desdits seconds réservoirs, mais permet également que le niveau du fluide ne dépasse pas le niveau du dit troisième orifice intermédiaire à l'intérieur dudit second réservoir concerné.

Avantageusement, la longueur L1 dudit premier réservoir est supérieure ou égale à 10 fois son diamètre D1, de préférence de 15 à 30 fois son diamètre D1.

Ce dimensionnement assure une résistance à la compression à grand fond optimale pour les parois dudit réservoir.

Plus particulièrement, le carré du diamètre desdits seconds réservoirs (D2)² est supérieur ou égal à (1/n) x (D1)², n étant le nombre de dits seconds réservoirs et D1 le diamètre dudit premier réservoir.

Cette caractéristique permet que la vitesse des particules de fluide partiellement dégazé s'écoulant en descente à l'intérieur desdits seconds réservoirs, soit inférieur ou égal à 1/n fois la vitesse des particules de fluide brut de remplissage dudit premier réservoir s'écoulant en montée à l'intérieur dudit premier réservoir dans sa partie inférieure.

Plus particulièrement encore, le diamètre desdits seconds réservoirs est inférieur au diamètre dudit premier réservoir et, de préférence, la longueur desdits seconds réservoirs est inférieure à la longueur desdits premiers réservoirs.

Avantageusement, lesdits premiers orifices intermédiaires dudit premier réservoir sont situés respectivement à une hauteur H par rapport à l'extrémité inférieure dudit premier réservoir, correspondant à une hauteur de 1/4 à 1/2 de la longueur totale L1 dudit premier réservoir, et de préférence environ 1/3.

De préférence encore, le dispositif selon l'invention comprend à l'intérieur dudit premier réservoir à l'extrémité desdites premières conduites de transfert, des dispositifs de contrôle du débit du transfert de fluide par perte de charge, de préférence de type cyclone à entrée tangentielle sensiblement parallèlement à la direction axiale dudit premier réservoir, et à sortie axiale sensiblement dans l'axe desdites premières conduites de transfert.

De tels dispositifs de contrôle permettent de contrôler le débit de fluide partiellement dégazé s'écoulant dans lesdites premières conduites de transfert entre ledit premier réservoir et lesdits seconds réservoirs.

Plus particulièrement, ces dispositifs de contrôle de débit de transfert par perte de charge permettent en fait d'atténuer et d'uniformiser les débits de fluide s'écoulant à l'intérieur des différentes dites premières conduites et dits seconds réservoirs, compte tenu des régimes instables, perturbateurs, pouvant résulter des éclatements de bulles ou poches de gaz, lors de leur dégazage au sein dudit fluide brut à l'intérieur dudit premier réservoir.

Plus particulièrement, le dispositif selon l'invention comprend un premier réservoir central entouré d'une pluralité de dits seconds réservoirs, de préférence de 4 à 12, disposés verticalement, répartis de préférence de façon sensiblement régulière et circulairement autour dudit premier réservoir.

Plus particulièrement encore, lesdites premières conduites de transfert, entre ledit premier réservoir et lesdits seconds réservoirs, arrivent au niveau desdits seconds orifices intermédiaires, de sorte que le fluide s'écoule initialement en arrivant tangentiellement à l'intérieur de la paroi cylindrique desdits seconds réservoirs.

Cette configuration de la liaison entre lesdits premier et deuxièmes réservoirs, permet d'atténuer les perturbations éventuelles du débit de fluide et de favoriser la séparation des gaz résiduels au sein desdits deuxièmes réservoirs.

Dans un mode particulier de réalisation du dispositif selon l'invention, les différents dits deuxièmes orifices inférieurs desdits seconds réservoirs, sont reliés à un premier collecteur inférieur, de préférence torique, lui-même relié à une unique conduite d'évacuation de liquide ou un unique deuxième élément de conduite relié à celle-ci, et
- les différents dits deuxièmes orifices supérieurs desdits seconds réservoirs sont reliés à un même deuxième collecteur supérieur, lui-même relié à une unique conduite d'évacuation de gaz ou un unique troisième élément de conduite relié à celle-ci.

Plus particulièrement encore, les différents premiers et seconds réservoirs sont solidaires d'une structure support comprenant au moins un châssis disposé dessous lesdits réservoirs et supportant des parties de connecteurs automatiques connectés auxdits premier orifice inférieur et seconds orifices inférieurs et supérieurs ou à des extrémités d'éléments de conduite reliées auxdits premier orifice inférieur et seconds orifices inférieurs et supérieurs.

Selon une variante préférée de réalisation, le dispositif de l'invention est installé au fond de la mer, ladite conduite d'arrivée de fluide assurant la liaison entre au moins une tête de puits et ledit premier orifice inférieur dudit premier réservoir ou un unique premier élément de conduite relié à celui-ci.

Plus particulièrement, ladite conduite d'évacuation de fluide coopère avec une dite pompe d'export, insérée dans un deuxième puits dit puits de pompe enfoncé au fond de la mer à coté de ladite ancre à succion de ladite embase, ledit puits de pompe étant de préférence solidaire de ladite ancre à succion.

Avantageusement, lesdits réservoirs sont isolés thermiquement par une même enceinte rigide d'isolation thermique remplie d'eau de mer, et en communication avec la mer par au moins un orifice de communication, de préférence la paroi de ladite enceinte comprenant de la mousse syntactique, ou un isolant thermique protégé par un support rigide en métal ou en matériaux composites,de préférence encore avec un dispositif de chauffage de l'eau de mer à l'intérieur de ladite enceinte, ledit orifice de communication et dispositif de chauffage étant de préférence encore en partie basse de ladite enceinte.

Ce mode de réalisation permet de maintenir le fluide de pétrole brut à la température élevée de 50 à 70°C, à laquelle il sort de la tête de puits, et faciliter ainsi la remontée en surface du fluide, en évitant la solidification des paraffines ou la formation d'hydrates de gaz par refroidissement du pétrole brut en dessous de 30-35°C.

La présente invention fournit également un procédé de séparation des deux phases liquide et gazeuse d'un fluide à l'aide d'un dispositif de séparation gaz/liquide selon l'invention, caractérisé en ce que l'on réalise les étapes suivantes, dans lesquelles :
1) on envoie le pétrole brut, par l'intermédiaire d'une conduite d'arrivée, jusqu'audit premier orifice inférieur dudit premier réservoir, et
2) le pétrole brut remonte au sein dudit premier réservoir et le remplit jusqu'auxdits premiers orifices intermédiaires, puis s'écoule, en partie dégazé au moins, à travers lesdites premières conduites de transfert pour redescendre vers les deuxièmes orifices inférieurs à l'extrémité inférieure desdits deuxièmes réservoirs, et
3) on récupère, au niveau d'au moins un dit premier orifice supérieur, du gaz séparé dudit pétrole brut au sein dudit premier réservoir et, le cas échéant du pétrole liquide partiellement seulement dégazé, que l'on véhicule par une dite deuxième conduite de transfert au niveau d'au moins un troisième orifice intermédiaire au sein d'au moins un dit second réservoir, et
4) on récupère le gaz séparé dudit pétrole au sein dudit deuxième réservoir, au niveau desdits deuxièmes orifices supérieurs, puis au sein d'une dite conduite d'évacuation de gaz, et
5) on récupère le liquide ou fluide substantiellement dégazé au niveau desdits deuxièmes orifices inférieurs desdits deuxièmes réservoirs, que l'on achemine par l'intermédiaire d'une dit conduite d'évacuation de liquide que l'on remonte jusqu'en surface ou que l'on envoie vers un dispositif de séparation liquide/liquide de façon à séparer les pluralités de phases liquides contenues dans ledit fluide dégazé, notamment pour séparer l'huile et l'eau d'un pétrole dégazé, et
le cas échéant un reliquat de gaz encore présent dans un pétrole brut imparfaitement dégazé.

Avantageusement, on envoie ledit pétrole brut à l'extrémité inférieure du dit premier réservoir, à une pression réduite P1, inférieure à la pression statique au fond de la mer P2, de préférence telle que le différentiel de pressions ΔP = P1-P0, P0 étant la pression en surface, soit supérieur aux pertes de charges dans les conduites d'évacuation de gaz depuis lesdits deuxièmes orifices supérieurs jusqu'à la surface. Ceci permet de faire remonter le gaz en surface sans matériel complémentaire et/ou sans apporter d'énergie complémentaire externe notamment sans la mise en oeuvre d'un compresseur.

Dans un mode de réalisation particulier, on exporte le liquide de fluide dégazé depuis le fond de la mer jusqu'en surface à l'aide d'une dite pompe d'export.

Avantageusement, on contrôle le débit d'arrivée de fluide brut en amont dudit premier réservoir par la dite vannes de contrôle de débit, et/ou on contrôle le débit d'évacuation du fluide dégazé en aval des seconds réservoirs par la vitesse de ladite pompe d'export en fonction des mesures d'au moins un dispositif de contrôle du niveau du fluide au sein d'au moins un dit second réservoir.

Plus particulièrement, le contrôle du niveau de fluide brut au sein dudit second réservoir, de préférence une sondes, permet de commander l'augmentation ou la diminution du débit de fluide brut arrivant à l'extrémité inférieure du premier réservoir au niveau de la dite vanne de contrôle de débit et/ou commander la diminution ou respectivement l'augmentation de la vitesse de la pompe d'export soutirant le fluide dégazé à l'extrémité inférieure desdits seconds réservoir dans le cas où le niveau de fluide détecté dans ledit second réservoir serait situé au-dessous du niveau desdits seconds orifices intermédiaires ou respectivement au dessus dudit troisième orifice intermédiaire ou, de préférence, au dessus desdits seconds orifices intermédiaires.

Dans un mode de réalisation particulier, ledit dispositif de séparation est installé au fond de la mer, à une profondeur de 100 à 4000 m et l'on établit une pression P2 de 10 à 50, de préférence 20 bar (20x10⁵ Pa) au sein desdits premier et seconds réservoirs, en baissant la pression à l'aide d'un dispositif de baisse de pression coopérant avec ladite conduite d'arrivée de fluide brut en amont dudit premier orifice inférieur du premier réservoir.

D'autres caractéristiques et avantages de la présente invention apparaîtront à la lumière de la description détaillée des modes de réalisation qui va suivre, en référence aux figures 1 à 4 :
- la figure 1 est une vue de face d'un séparateur sous-marin vertical selon l'invention en cours de descente vers son embase solidaire d'une ancre a succion installée au fond de la mer,
- la figure 1A est une vue d'une section de l'ancre a succion selon le plan AA de la figure 1,
- la figure 2 est une vue de côté du séparateur sous-marin installé sur son embase,
- la figure 2A est une vue d'une section du séparateur sous-marin selon le plan BB de la figure 2,
- la figure 3 est une vue de dessus en section partielle au niveau du plan BB de la figure 2, illustrant un dispositif de perte de charge contrôlée,
- la figure 3A est une vue de dessus du cheminement du fluide au sein dudit dispositif de perte de charge contrôlée de la figure 3,
- la figure 3B est une vue de côté selon YY du cheminement du fluide au sein dudit dispositif de perte de charge contrôlée de la figure 3,
- la figure 3C est un graphique illustrant les pertes de charge respectivement dans un dispositif selon la disposition de la figure 2A et selon le dispositif de perte de charge contrôlée de la figure 3,
- la figure 4 est une vue de côté d'un séparateur sous-marin installé sur son embase, équipé d'une cloche isolante.

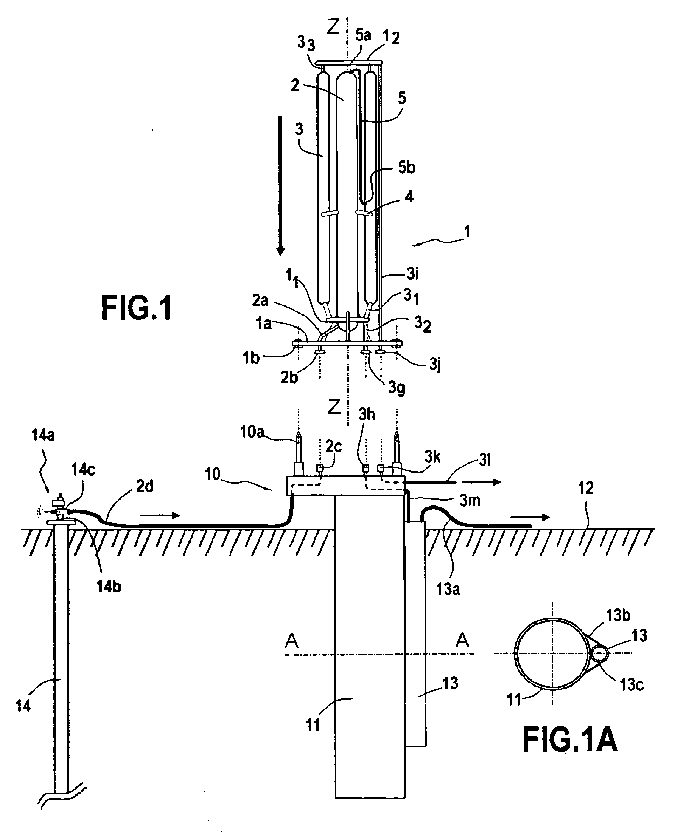

Sur la figure 1, on a représenté la descente d'un dispositif séparateur liquide/gaz sous-marin selon l'invention 1, depuis la surface au moyen d'un câble, non représenté, vers une embase reposant au fond de la mer solidaire d'une ancre à succion 11 enfoncée dans le fond de la mer 12.

L'embase est disposée à proximité d'un puits de pétrole 14 équipée d'une tête de puits 14a reliée par une conduite d'arrivée de pétrole brut 2d, acheminant le pétrole brut depuis la tête de puits jusqu'à la dite embase.

Le séparateur sous-marin selon l'invention comporte un premier réservoir central 2 en forme de cigare, c'est-à-dire avec une partie courante cylindrique à section circulaire obturée à ses extrémités, de préférence avec des calottes demi-sphériques, de manière à résister de façon optimale à la pression hydrostatique du fond de la mer par exemple de diamètre D1 de 0,75 à 1,50 m et de hauteur H1 de 10 à 35 m réalisé avec des parois métalliques de 20 à 30 mm d'épaisseur.

A une hauteur H de l'extrémité inférieure dudit premier réservoir central 1, c'est-à-dire à partir du fond de celui-ci, H correspondant à environ 25 à 50 % de la hauteur totale dudit premier réservoir, des premiers orifices intermédiaires 4a sont disposés, uniformément répartis sur la périphérie du premier réservoir, communiquant par l'intermédiaire de premières conduites de liaison inclinées 4 avec des seconds orifices intermédiaires 4b, de seconds réservoirs 3.

Ces seconds réservoirs ont également une forme de cigare avec une partie courante cylindrique, obturée à ses extrémités, par des calottes demi-sphériques.

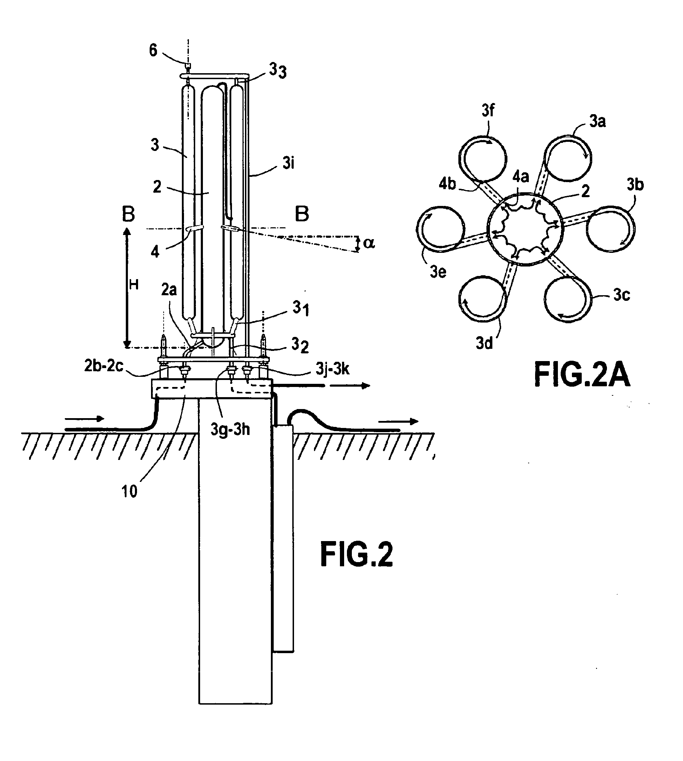

Sur la figure 2A, on a représenté un premier réservoir central 2, entouré de six seconds réservoirs 3a à 3f, uniformément répartis et à distance constante, disposés verticalement et parallèlement audit premier réservoir.

Chacun desdits premiers orifices intermédiaires 4a du premier réservoir communique avec un unique deuxième orifice intermédiaire 4b de chacun desdits seconds réservoirs.

Lesdites premières conduites de liaison 4 sont toutes identiques en terme de diamètre, de longueur et de mode de raccordement du premier réservoir 2 à chacun des seconds réservoirs 3a-3f.

Les deuxièmes orifices intermédiaires 4b des seconds réservoirs 3 sont disposés en contrebas par rapport aux dits premiers orifices intermédiaires du premier réservoir, de sorte que lesdites premières conduites de liaison sont inclinées d'un angle α, par exemple de 5 à 10°.

Le dispositif séparateur comporte dessous lesdits réservoirs un châssis 1a en forme de plate-forme comprenant quatre perforations équipées de quatre guides en forme d'entonnoirs 1b venant coopérer avec des poteaux 10a correspondants, solidaires de l'embase et s'élevant verticalement au-dessus de celle-ci, de manière à ce que, lors de la descente du dispositif en direction de l'embase, en fin de descente, les parties femelles 2b-3g-3j d'une série de connecteurs automatiques situés dessous ledit châssis, viennent coopérer avec les parties mâles complémentaires 2c-3h-3k de connecteurs automatiques disposés sur ladite embase.

Ledit premier réservoir 2 comporte à son extrémité inférieure un orifice inférieur solidaire d'un élément de conduite 2a à l'extrémité duquel, en sous face dudit châssis 1a, se trouve la partie femelle 2b d'un connecteur automatique qui coopèrera avec la partie complémentaire mâle 2c du connecteur automatique sur ladite embase, à l'extrémité de ladite conduite d'arrivée de fluide brut 2d.

A l'extrémité inférieure de chacun desdits seconds réservoirs 3, des seconds orifices inférieurs 3₁ sont reliés à un premier collecteur torique 1₁, ce dernier étant relié par un élément de conduite 3₂, terminant par la partie femelle 3g d'un connecteur automatique, coopérant avec la partie complémentaire mâle 3h du connecteur automatique solidaire de ladite embase, ce dernier étant à l'extrémité d'une conduite d'évacuation de fluide dégazé ou liquide 3m.

Les seconds réservoirs ont une longueur quelque peu réduite par rapport au premier réservoir de sorte que l'extrémité inférieure dudit premier réservoir passe à travers ledit premier collecteur torique inférieur 1₁ de sorte que ledit premier orifice inférieur et ledit premier élément de conduite 2a s'étendent dessous ledit premier collecteur torique 1₁.

L'extrémité inférieure du premier réservoir 2 ainsi que le premier collecteur torique 1₁ sont reliés audit châssis 1a par une série de goussets dont un unique gousset est représenté.

Ledit premier réservoir central 2 comprend, à son extrémité supérieure, un premier orifice supérieur 5a.

Au moins un desdits réservoirs 3 comprend un troisième orifice intermédiaire 5b situé au-dessus dudit second orifice intermédiaire 4b correspondant.

Ledit premier réservoir 2 étant relié à au moins un desdits seconds réservoirs 3a-3f par une seconde conduite de transfert 5, assurant la liaison entre ledit premier orifice supérieur 5a et ledit troisième orifice intermédiaire 5b.

Lesdits seconds réservoirs 3a-3f comprennent chacun à leur extrémité supérieure un second orifice supérieur coopérant avec un second élément de conduite 3₃ relié à un second collecteur torique supérieur 1₂, ce dernier étant relié à un élément de conduite d'évacuation de gaz 3i, dont l'extrémité inférieure est solidaire de ladite embase 10 en sous face de celle-ci et comprend la partie femelle 3j d'un connecteur automatique qui coopère avec la partie complémentaire mâle 3k du connecteur automatique solidaire de ladite embase 10 lorsque le dispositif de séparation est fixé sur ladite embase.

Ladite partie mâle 3k sur ladite embase est fixée à l'extrémité d'une conduite d'évacuation de gaz 3l.

Les extrémités supérieures desdits premier et second réservoirs sont éventuellement solidarisées avec ledit second collecteur supérieur torique 1₂ par des goussets de maintien, non représentés.

Toutefois, dans un mode de réalisation, les éléments de conduite aux extrémités inférieure et supérieure desdits premier et second réservoirs, assurant les liaisons avec lesdits premier et second collecteurs toriques et ledit châssis 1a ainsi que lesdites premières conduites de transfert 4, sont suffisamment rigides pour assurer la maintien de l'ensemble de la structure:

Le pétrole brut à haute pression, par exemple à 100-200bars, voire plus, provient du puits 14 surmontée de la tête de puits 14a équipé d'un dispositif de baisse de pression de type duse 14b et d'une vanne automatisée de contrôle de débit 14c pilotés depuis la surface, et reliés à une conduite 2d conduisant le pétrole brut à pression réduite, par exemple 20 bars vers le séparateur sous-marin 1.

Le pétrole brut pénètre dans le premier réservoir 1 en partie basse et remplit ce dernier jusqu'à atteindre le plan BB dans lequel sont situées les premier orifices intermédiaires 4a et le pétrole se déverse dans lesdites premières conduites de transfert 4 vers les seconds réservoirs.

Durant la remontée du pétrole brut dans le premier réservoir, le pétrole étant à faible pression par rapport à sa pression en sortie de puits, commence une phase de dégazage durant laquelle des bulles de gaz s'expansent rapidement et atteignent la surface libre située au dessus du plan BB :
- le cheminement du pétrole se fait alors du bas vers le haut avec une vitesse de particule V2 = Q/S2, où Q est le débit et S2 la section dudit premier réservoir 2.

Lorsque la pétrole brut atteint les premières conduites de transfert 4 vers les seconds réservoirs 3, le flux et donc le débit se trouve alors sensiblement divisé en autant de flux que le nombre desdits seconds réservoirs, en l'occurrence divisé par 6 comme illustré sur la figure 2A.

Les premières conduites de transfert 4 sont connectées de préférence radialement audit premier réservoir, mais présentent une inclinaison a, par exemple 5 à 10°, de manière à ce que le pétrole brut s'écoule naturellement du premier réservoir vers les seconds réservoirs, auxquels elles peuvent être raccordées soit simplement radialement, soit avantageusement tangentiellement comme représenté sur la figure 2A.

Dans ce dernier cas, représenté figure 2A, le pétrole brut rentre alors dans le second réservoir avec un léger effet de tourbillonnement, puis continue par simple gravité sa progression vers le bas dudit second réservoir.

Dans ce second réservoir, le pétrole brut termine son dégazage pendant toute la durée de la progression vers le bas des particules jusqu'à l'orifice inférieur 3₁ de sortie dudit second réservoir, et les bulles remontent vers la surface et traversent le plan tourbillonnant de pétrole brut au niveau du plan BB.

La vitesse des particules vers le bas est alors V3=Q/n/S3, où Q est le débit global, n le nombre de seconds réservoirs et S3 la section desdits seconds réservoirs 3.

Ainsi, si le premier réservoir et les six seconds réservoirs ont le même diamètre, donc la même section, la vitesse des particules vers le bas est six fois plus lente dans les seconds réservoirs que la vitesse des particules vers le haut dans le premier réservoir, ce qui facilite et améliore la qualité du dégazage dans les seconds réservoirs.

Dans le premier réservoir s'effectue un dégazage grossier des plus grosses bulles de gaz, tandis que dans les seconds réservoirs s'effectue le dégazage final des plus petites bulles de gaz.

Le premier réservoir s'étend sur une longue distance au dessus du plan BB pour amortir les phénomènes appelés en anglais « slugs », c'est à dire « écoulement bouchon », qui correspondent à l'arrivée brutale par la conduite inférieure 2a de poches de gaz importantes, ou de bouchons de pétrole entre deux poches de gaz.

Ces phénomènes sont très violents et perturbent complètement le processus de séparation, car une grande partie du pétrole brut dans la zone du plan BB se trouve alors projeté brutalement vers le haut dudit premier réservoir.

En augmentant de manière considérable la longueur dudit premier réservoir au dessus du plan BB, on minimise les effets perturbateurs des slugs et la séparation du gaz se restabilise rapidement dans le plan BB dès que le flux de pétrole brut redevient stable.

En partie haute du premier réservoir ; la dite seconde conduite de transfert 5 récupère le gaz et le dirige vers au moins un des seconds réservoirs, de préférence au niveau de la partie médiane desdits seconds réservoirs, au dessus du plan BB, par exemple à 2m au dessus dudit plan BB.

Ainsi, le gaz séparé du pétrole brut au sein du premier réservoir est évacué par le haut à travers la conduite 5 et rejoint le ou les seconds réservoirs au dessus du plan BB, donc dans la zone où se rassemble le gaz qui s'échappe du brut pénétrant dans lesdits seconds réservoirs. Ainsi, tout le gaz séparé au niveau des premier réservoir et seconds réservoirs se rassemble dans lesdits seconds réservoirs et est ensuite dirigé vers le collecteur torique supérieur 1₂ puis évacué par la conduite d'évacuation de gaz 3l comme expliqué précédemment.

Les seconds réservoirs sont avantageusement d'un diamètre similaire, ou supérieur à celui du premier réservoir si l'on souhaite diminuer la vitesse verticale vers le bas des particules de pétrole brut et ainsi améliorer la qualité de dégazage.

Ainsi, dans le cas de brut visqueux, les bulles de dégazage auront des difficultés à vaincre de courant descendant dans les seconds réservoirs et l'on disposera alors avantageusement un plus grand nombre de seconds réservoirs et de plus fort diamètre, par exemple 8 ou 12 seconds réservoirs de 1.25m de diamètre pour un premier réservoir de 1m de diamètre.

Les seconds réservoirs qui sont au moins au nombre de deux, disposés symétriquement de part et d'autre dudit premier réservoir, de préférence 4-6-8-12, voire plus, ou encore en nombre impair.

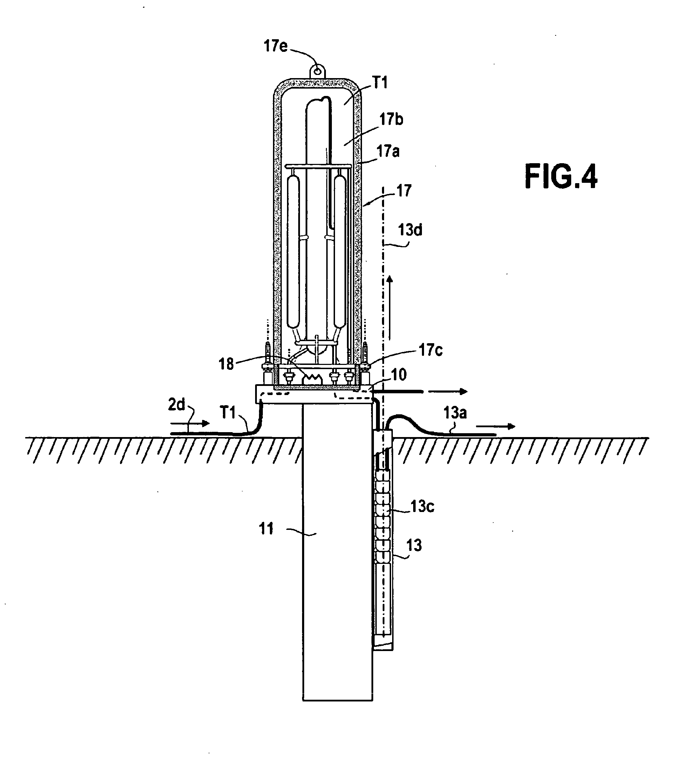

Leur hauteur peut être similaire à celle du premier réservoir ou être plus faible comme représenté sur la figure 4.

Le pétrole brut dégazé est récupéré en partie basse des seconds réservoirs par le biais du premier collecteur 1₁ dirigeant le fluide vers un premier élément de conduite d'évacuation de fluide dégazé 3d.

Celle-ci alimente la pompe d'export immergée 13c représentée sur la figure 4, logée dans un puits 13 attenant à l'ancre à succion 11 et solidarisé à cette dernière par des goussets 13b représentés sur la figure 1A, mais non représenté sur les figures 1-2-4.

En sortie de pompe, le pétrole brut dégazé est expédié par un deuxième élément de conduite d'évacuation de fluide dégazé 13a, soit vers un support flottant en surface, soit vers un séparateur secondaire eau-huile, de manière à ce que seule l'huile soit expédiée vers la surface, l'eau étant soit réinjectée dans un puits similaire au puits 14, ou encore simplement relâchée ne mer, dans la mesure où elle présente une propreté acceptable, c'est-à-dire une quantité suffisamment faible de particules résiduelles de pétrole brut.

De la même manière, le gaz séparé en partie haute desdits seconds réservoirs est expédié par la conduite d'évacuation de gaz 31, soit vers la surface, soit re-comprimé puis réinjecté dans un puits similaire au puits 14.

Le fonctionnement d'ensemble du dispositif de séparation 1 est contrôlé grâce à au moins un dispositif de mesure de niveau 6 installé au sommet d'au moins un desdits seconds réservoirs, comme représenté sur la figure 2.

Ce dispositif de mesure ou capteur du type radar ou sonar qui renseigne sur le niveau du plan de séparation du pétrole brut et du gaz dans ledit second réservoir et permet d'ajuster le débit de pétrole brut arrivant dans le premier réservoir en commandant l'ouverture de la vanne régulatrice de débit 14c de la tête de puits 14a et/ou la vitesse de la pompe d'export 13c. Si le niveau est au dessus du plan BB, le second réservoir se remplit trop, le débit d'arrivée de pétrole brut sera réduit au niveau de la vanne 14c du puits 14 ou le régime de la pompe augmenté.

Si le niveau est plus bas que le plan BB, le débit de fluide en tête de puits sera augmenté ou le régime de la pompe d'export diminué. La pression du gaz dans la conduite 3l d'expédition vers le support flottant est contrôlée par ajustement au niveau dudit support flottant.

Pour éviter d'avoir à re-comprimer le gaz avant de l'expédier en surface, on ajuste avantageusement la pression de fonctionnement du séparateur sous-marin, c'est-à-dire la pression P1 à l'intérieur des dits réservoirs, à une pression largement supérieure à la perte de charge dans ladite conduite gaz, par exemple une pression de fonctionnement de 20 bars, alors que la perte de charge ne serait que de 3 bars sur la longueur complète de la conduite de remontée en surface 31 pour le débit maximal de gaz.

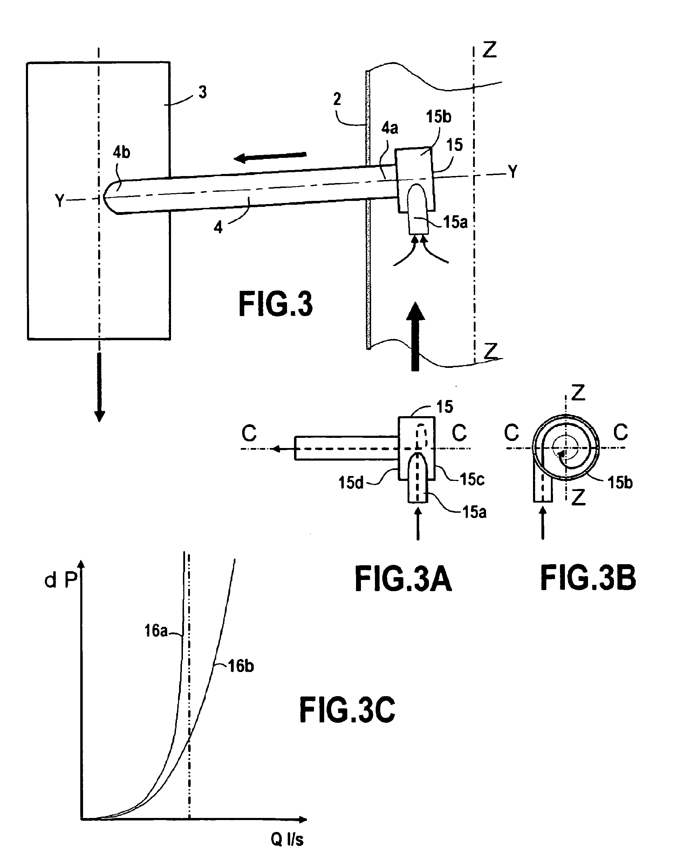

Sur les figures 3-3A-3B, on a représenté en coupe et en vue de côté une disposition préférée de la première conduite de transfert 4 entre le premier réservoir et un second réservoir, dans laquelle ladite conduite 4 pénètre à l'intérieur dudit premier réservoir et est équipé à son extrémité d'un dispositif additionnel 15 de type cyclone destiné à créer une perte de charge supplémentaire en cas d'augmentation significative du débit. A cet effet, le dispositif de type cyclone 15 est constitué d'une enceinte comprenant une paroi cylindrique 15b concentrique à la première conduite de transfert 4 et de diamètre compris, de préférence, entre 1.2 et 4 fois le diamètre de ladite conduite 4.

La paroi cylindrique 15b de l'enceinte est fermée et rendue étanche à ses extrémités au niveau des faces opposées 15c-15d. L'une de ses deux faces, la face 15d est traversée par l'extrémité de la dite première conduite de transfert 4.

La paroi cylindrique 15b du dispositif 15 possède une dérivation tubulaire permettant une entrée tangentielle 15a du pétrole brut contre la surface interne de la dite paroi cylindrique 15b dans une direction parallèle sensiblement à la direction axiale ZZ du dit premier réservoir 2.

En fonctionnement normal et régulier, l'écoulement du pétrole brut reste sensiblement au niveau du plan axial CC de la conduite 4 d'inclinaison d'un angle α par rapport à l'horizontale, et le dispositif 15 ne modifie pas le fonctionnement du système qui présente les mêmes performances que celui décrit précédemment en référence aux figures 2-2A.

En cas d'augmentation importante du débit, ou d'instabilité du système lors de la venue d'un « slug », l'écoulement dans le dispositif 15 devient tourbillonnaire comme indiqué sur la figure 3B créant ainsi une perte de charge importante, réduisant de ce fait la transmission de l'instabilité temporaire du processus vers le second réservoir.

Cet effet est illustré sur le diagramme 3C qui représente en ordonnées les pertes de charge et en abscisses les débits de fluide.

Dans le cas d'un raccordement direct de la conduite 4 au premier réservoir comme illustré sur la figure 2A, la courbe 16b des pertes de charges est sensiblement parabolique, alors qu'avec le dispositif 15, la courbe correspondante 16a est sensiblement parabolique pour les faibles débit, mais croit de manière asymptotique pour les débits importants.

Le dispositif étant installé à grande profondeur, la température de l'eau de mer est de 3-5°C, et pour éviter que le pétrole brut ne fige en paraffine, ou que des hydrates ne se forment, créant ainsi des blocages généralisés qu'il est difficile, voire dans certains cas impossible à résorber, on cherche à isoler chacun des éléments entre la sortie de terre du puits 14 et la surface, ou les puits de réinjection.

A cet effet, installe avantageusement une enceinte isolante 17 entourant intégralement les réservoirs et l'embase 10 du séparateur sous-marin, l'enceinte 17 étant rigidifiée par exemple par une structure métallique ou composite et comportant un isolant interne 17a qui peut être une mousse syntactique, un gel d'isolation, ou tout autre système d'isolation compatible avec la pression du fond de la mer qui est sensiblement de 100 bars, soit sensiblement 10MPa par tranche de 1000m d'eau.

On aurait pu isoler séparément chacun des composants du séparateur sous-marin, c'est-à-dire le premier réservoir indépendamment des seconds réservoirs et des diverses conduites, mais la partie haute au dessus du plan BB n'étant en général qu'en phase gazeuse, les risques de points froids s'en trouvent alors fortement augmentés. En créant un volume interne 17b calorifugé en 17a, l'eau de mer contenue dans ledit volume sera en permanence sensiblement à la température T1 du pétrole brut entrant par 2d. En effet, un courant de convection interne au volume 17b brassera en permanence ledit volume, maintenant ainsi pendant toute la durée du processus une température sensiblement constante au sein du séparateur sous-marin, dont la hauteur peut dépasser 35m, et plus particulièrement dans la partie haute dudit séparateur, laquelle est de manière quasi permanente en gaz.

Pour limiter les transferts de chaleur en partie basse, on disposera avantageusement une isolation complémentaire 17c au niveau de l'embase 10.

Un orifice inférieur de l'enceinte 17, non représenté, met avantageusement en communication le volume interne 17b et le milieu ambiant de manière à éviter les variations de pression dues aux dilatations mais il sera de faible diamètre, par exemple 50mm, pour éviter les phénomènes de convection indésirables.

Comme représenté sur la figure 4, on dispose avantageusement en partie basse de l'enceinte isolante 17, et à l'intérieur de cette dernière un dispositif de préchauffage/réchauffage 18 de l'eau, de manière à maintenir son volume interne d'eau de mer à une température suffisante évitant la formation de bouchons de paraffine ou d'hydrates pendant les phases de démarrage, d'arrêt prolongé, ou de production à faible régime. Ce dispositif de chauffage peut être électrique, ou une boucle de fluide circulant, par exemple une dérivation du pétrole brut de production passant par un serpentin non calorifugé, au sein dudit volume d'eau interne à l'enceinte calorifugée.

L'enceinte isolante est avantageusement manipulée depuis la surface ou par un ROV, sous-marin automatisé piloté depuis la surface, grâce au point d'attache supérieur 17e.

Sur cette même figure 4, on a représenté la pompe d'export 13c installée dans son puits 13 et que l'on peut avantageusement extraire verticalement selon 13d, sans avoir à démonter le séparateur sous-marin, pour effectuer sa maintenance en surface.

Le puits de pompe 13 étant solidaire de l'ancre à succion, se trouvera ainsi installé en même temps que ladite ancre à succion 11 et dans une position géométrique connue par rapport à l'embase 10 de supportage du séparateur sous-marin 1.

Cette disposition particulière de la pompe 13c installée à plusieurs mètres, voire plusieurs dizaines de mètres en dessous du séparateur, permet d'améliorer avantageusement le gavage de ladite pompe 13c et ainsi de fiabiliser son fonctionnement et sa durée de vie.

A titre d'exemple, un séparateur vertical selon l'invention présente une capacité de séparation de 500m3/heure de pétrole brut avec un GOR (gas/oil ratio), c'est-à-dire rapport gaz/pétrole brut de 100, c'est-à-dire 100Nm3 de gaz (Nm3= m3 de gaz à pression atmosphérique)par m3 de pétrole brut. Il est constitué d'un premier réservoir de L1=25m de hauteur et de diamètre D1=1m, les orifices 4a des premières conduites de liaison sont situées à 8m du fond. Les seconds réservoirs sont au nombre de 6, et leur diamètre est de D2=1.2m, leur hauteur est de L2=16m et les orifices 4b des premières conduites de liaison, sont situés à 7m du fond. Le débit de 500m3/h, soit 138.9l/s, représente une vitesse ascendante des particules dans le premier réservoir de 17,68cm/s, ce qui correspond à une durée de séparation au sein dudit premier réservoir de 45.2s, soit 0.75 min. La vitesse descendante des particules au sein desdits seconds réservoirs est alors 2.05cm/s, ce qui correspond à une durée de séparation au sein desdits seconds réservoirs de 342s, soit 5.7 min. Le temps global de séparation est ainsi de 6.45 minutes, 88,3% de la durée de séparation s'effectuant dans lesdits seconds réservoirs dans des conditions opérationnelles optimales qui permettent d'extraire de 90 à 95% du gaz contenu dans le pétrole brut.

## Revendications

1. Dispositif de séparation liquide/gaz de deux phases respectivement liquide et gazeuse d'un fluide, notamment les phases liquide et gazeuse d'un pétrole brut, comprenant au moins un premier réservoir (2) de forme allongée à section circulaire dont les extrémités inférieure et supérieure sont, de préférence encore, en forme de calotte sphérique partielle, de type cigare, disposé verticalement, dans lequel :
a) ledit premier réservoir (2) comprend une paroi équipée de :
- un premier orifice inférieur (2a), à son extrémité inférieure, relié à une conduite d'arrivée (2d) dudit fluide, et comprenant un dispositif de baisse de pression (14b) et, de préférence, une vanne de contrôle du débit de fluide (14c) en amont,
- au moins un premier orifice supérieur (5a), à son extrémité supérieure, et
- une pluralité de premiers orifices intermédiaires (4a), et
b) ledit premier réservoir (2) étant relié à une pluralité de seconds réservoirs (3, 3a-3f) par une pluralité de premières conduites de transfert (4) et au moins une deuxième conduite de transfert (5),
- lesdits seconds réservoirs (3, 3a-3f) étant également de forme allongée à section circulaire dont les extrémités inférieure et supérieure sont, de préférence encore, en forme de calotte sphérique partielle, de type cigare, et disposés verticalement,
c) lesdits seconds réservoirs (3, 3a-3f) comprenant chacun :
- un deuxième orifice supérieur (3₃), à leur extrémité supérieure, relié à une même conduite d'évacuation de gaz (3l), et
- un deuxième orifice intermédiaire (4b) disposé en contrebas par rapport audit premier orifice intermédiaire (4a), auquel il est relié par une dite première conduite de transfert (4) inclinée, et un deuxième orifice inférieur (3₁), à son extrémité inférieure, relié à une même conduite d'évacuation de fluide dégazé (3d, 13a), comprenant en aval une pompe d'export (13c) apte à soutirer ledit fluide dégazé à l'extrémité inférieure desdits seconds réservoirs, et
d) ledit premier orifice supérieur (5a) dudit premier réservoir (2) étant relié par au moins une deuxième conduite de transfert (5) à au moins un troisième orifice intermédiaire (5b) d'au moins un dit deuxième réservoir (3, 3a-3f), ledit troisième orifice intermédiaire (5b) étant situé au-dessus dudit deuxième orifice intermédiaire (4b) du même dit deuxième réservoir.

2. Dispositif selon la revendication 1, **caractérisé en ce qu'**il comprend un dispositif de contrôle du niveau du fluide (6) à l'intérieur d'un dit réservoir, de préférence à l'intérieur d'un dit second réservoir, qui permet de commander une dite vanne de contrôle du débit de fluide (14c) en amont dudit premier orifice inférieur du premier réservoir et/ou une dite pompe d'export de fluide dégazé (13b) en aval des dits deuxièmes orifices inférieurs des seconds réservoirs.

3. Dispositif selon la revendication 1 ou 2, **caractérisé en ce que** la longueur L1 dudit premier réservoir est supérieure ou égale à 10 fois son diamètre D1, de préférence de 15 à 30 fois son diamètre D1.

4. Dispositif selon l'une des revendications 1 à 3, **caractérisé en ce que** le carré du diamètre desdits seconds réservoirs (D2)² est supérieur ou égal à (1/n)x(D1)², n étant le nombre de dits seconds réservoirs et D1 le diamètre dudit premier réservoir.

5. Dispositif selon l'une des revendications 1 à 4, **caractérisé en ce que** le diamètre desdits seconds réservoirs (D2) est inférieur au diamètre dudit premier réservoir (D1) et, de préférence, la longueur desdits seconds réservoirs (L2) est inférieure à la longueur dudit premier réservoir (L1).

6. Dispositif selon l'une des revendications 1 à 5, **caractérisé en ce que** lesdits premiers orifices intermédiaires (4a) dudit premier réservoir sont situés respectivement à une hauteur H par rapport à l'extrémité inférieure dudit premier réservoir, correspondant à une hauteur de 1/4 à 1/2 de la longueur totale L1 dudit premier réservoir, et de préférence environ 1/3.

7. Dispositif selon l'une des revendications 1 à 6, **caractérisé en ce qu'**il comprend, à l'intérieur dudit premier réservoir à l'extrémité desdites premières conduites de transfert (4), des dispositifs de contrôle du débit du transfert de fluide par perte de charge (15), de préférence de type cyclone à entrée tangentielle (15a) sensiblement parallèlement à la direction axiale (ZZ) dudit premier réservoir, et à sortie axiale sensiblement perpendiculaire dans l'axe (YY) desdites premières conduites de transfert (4).

8. Dispositif selon l'une des revendications 1 à 7, **caractérisé en ce qu'**il comprend un premier réservoir central (2) entouré d'une pluralité de dits seconds réservoirs, de préférence de 4 à 12, disposés verticalement, répartis de préférence de façon sensiblement régulière et circulairement autour dudit premier réservoir (3a-3f).

9. Dispositif selon l'une des revendications précédentes, **caractérisé en ce que** lesdites premières conduites de transfert (4), entre ledit premier réservoir (2) et lesdits seconds réservoirs (3, 3a-3f), arrivent au niveau desdits seconds orifices intermédiaires (4b), de sorte que le fluide s'écoule initialement en arrivant tangentiellement à l'intérieur de la paroi cylindrique desdits seconds réservoirs.

10. Dispositif selon l'une des revendications 1 à 9, **caractérisé en ce que** :
- les différents dits deuxièmes orifices inférieurs (3₁) desdits seconds réservoirs, sont reliés à un premier collecteur inférieur, de préférence torique, (1₁) lui-même relié à une unique conduite d'évacuation de liquide (3m) ou un unique deuxième élément de conduite (3₂) relié à celle-ci, et
- les différents dits deuxièmes orifices supérieurs (3₃) desdits seconds réservoirs (3) sont reliés à un même deuxième collecteur supérieur (1₂), lui-même relié à une unique conduite d'évacuation de gaz (3l) ou un unique troisième élément de conduite (3i) relié à celle-ci.

11. Dispositif selon l'une des revendications 1 à 10, **caractérisé en ce que** les différents premiers et seconds réservoirs sont solidaires d'une structure support comprenant au moins un châssis (1a) disposé dessous lesdits réservoirs et supportant des parties de connecteurs automatiques (2b, 3g et 3j) connectés auxdits premier orifice inférieur (2a) et seconds orifices inférieurs (3₁) et supérieurs (3₃) ou à des extrémités d'éléments de conduite (2a, 3₂, 3i) reliées auxdits premier orifice inférieur et seconds orifices inférieurs et supérieurs.

12. Dispositif selon l'une des revendications 1 à 11, **caractérisé en ce qu'**il est installé au fond de la mer (12), ladite conduite d'arrivée de fluide (2b) assurant la liaison entre au moins une tête de puit (14) et ledit premier orifice inférieur dudit premier réservoir ou un unique premier élément de conduite relié à celui-ci (2a).

13. Dispositif selon la revendication 12, **caractérisé en ce que** ledit dispositif de séparation liquide/gaz (1) est connecté à une embase (10) reposant au fond de la mer (12), de préférence ladite embase (10) étant ancrée au fond de la mer par une ancre à succion (11), ladite embase supportant une série de parties mâles ou femelles de connecteurs automatiques (2c, 3h, 3k), respectivement aux extrémités desdites conduite d'arrivée de fluide (2d), conduite d'évacuation de liquide dégazé (3m) et conduite d'évacuation de gaz (3l), coopérant avec les parties complémentaires femelles ou, respectivement, mâles de connecteurs automatiques (2b, 3g, 3j) reliés auxdits premier et seconds orifices inférieurs (2a,3₁) et dits deuxièmes orifices supérieurs (3₃) ou aux extrémités desdits premier, deuxième et troisième éléments de conduite (2a, 3₂ et 3i), assurant la liaison avec lesdits premier orifice inférieur (2a), deuxièmes orifices inférieurs (3₁) et respectivement deuxièmes orifices supérieurs (3₃).

14. Dispositif selon l'une des revendications 12 ou 13, **caractérisé en ce que** ladite conduite d'évacuation de fluide (3m, 13a) coopère avec une dite pompe d'export (13b), insérée dans un deuxième puit (13) enfoncé au fond de la mer à coté de ladite ancre à succion (11) de ladite embase (10), de préférence ledit deuxième puits étant solidaire de ladite ancre à succion.

15. Dispositif selon l'une des revendications 12 à 14, **caractérisé en ce que** lesdits réservoirs sont isolés thermiquement par une même enceinte rigide d'isolation thermique (17) remplie d'eau de mer et en communication avec la mer par au moins un orifice de communication ,de préférence avec un dispositif de chauffage (18) de l'eau de mer à l'intérieur de l'enceinte, lesdits orifice de communication et dispositif de chauffage (18) étant de préférence encore situés en partie basse de l'enceinte.

16. Procédé de séparation des deux phase liquide et gazeuse d'un fluide à l'aide d'un dispositif selon l'une des revendications 1 à 15, **caractérisé en ce que** l'on réalise les étapes suivantes, dans lesquelles :
1) on envoie le pétrole brut, par l'intermédiaire d'une conduite d'arrivée (2d), jusqu'audit premier orifice inférieur (2a) dudit premier réservoir, et
2) le pétrole brut remonte au sein dudit premier réservoir et le remplit jusqu'auxdits premiers orifices intermédiaires (4a), puis s'écoule, en partie dégazé au moins, à travers lesdites premières conduites de transfert (4) pour redescendre vers les deuxièmes orifices inférieurs (3₁) à l'extrémité inférieure desdits deuxièmes réservoirs (3), et
3) on récupère, au niveau d'au moins un dit premier orifice supérieur (5a), du gaz séparé dudit pétrole brut au sein dudit premier réservoir et, le cas échéant du pétrole liquide partiellement seulement dégazé, que l'on véhicule par une dite deuxième conduite de transfert (5) au niveau d'au moins un troisième orifice intermédiaire (5b) au sein d'au moins un dit second réservoir (3), et
4) on récupère le gaz séparé dudit pétrole au sein dudit deuxième réservoir, au niveau desdits deuxièmes orifices supérieurs (3₃), puis au sein d'une dite conduite d'évacuation de gaz (31), et
5) on récupère le liquide ou fluide substantiellement dégazé au niveau desdits deuxièmes orifices inférieurs (3₁) desdits deuxièmes réservoirs, que l'on achemine par l'intermédiaire d'une dit conduite d'évacuation de liquide (3d) que l'on remonte jusqu'en surface ou que l'on envoie vers un dispositif de séparation liquide de façon à séparer les pluralités de phases liquides contenues dans ledit fluide dégazé, notamment pour séparer l'huile et l'eau d'un pétrole dégazé, et le cas échéant, un reliquat de gaz encore présent dans un pétrole brut imparfaitement dégazé.

17. Procédé selon la revendication 16, **caractérisé en ce que** l'on envoie ledit pétrole brut à l'extrémité inférieure du dit premier réservoir, à une pression réduite P1, inférieure à la pression statique au fond de la mer P2, de préférence telle que le différentiel de pressions ΔP = P1-P0, P0 étant la pression en surface, soit supérieur aux pertes de charges dans les conduites d'évacuation de gaz (31) depuis lesdits deuxièmes orifices supérieurs (3₃) jusqu'à la surface.

18. Procédé selon l'une des revendications 16 ou 17, **caractérisé en ce que** l'on exporte le liquide de fluide dégazé depuis le fond de la mer jusqu'en surface à l'aide d'une dite pompe d'export (13c).

19. Procédé selon l'une des revendications 16 à 18, **caractérisé en ce que** l'on contrôle le débit d'arrivée de fluide brut en amont dudit premier réservoir par la dite vanne de contrôle de débit (14c), et/ou on contrôle le débit d'évacuation du fluide dégazé en aval des seconds réservoirs par la vitesse de ladite pompe d'export (13c) en fonction des mesures au moins d'un dispositif de contrôle du niveau du fluide (6) au sein au moins d'un dit second réservoir.

20. Procédé selon la revendication 19, **caractérisé en ce que** le contrôle du niveau de fluide brut au sein dudit second réservoir, de préférence une sonde (6), permet de commander l'augmentation ou diminution du débit de fluide brut arrivant à l'extrémité inférieure du premier réservoir au niveau de la dite vanne de contrôle de débit (14c) et/ou commander la diminution ou respectivement l'augmentation de la vitesse de la pompe d'export (13c) soutirant le fluide dégazé à l'extrémité inférieure desdits seconds réservoirs dans le cas où le niveau de fluide détecté dans ledit second réservoir serait situé au-dessous du niveau desdits seconds orifices intermédiaires (4b) ou respectivement au dessus dudit troisième orifice intermédiaire (5b) ou, de préférence, au dessus desdits seconds orifices intermédiaires (4b).

21. Procédé selon l'une des revendications 16 à 20, **caractérisé en ce que** ledit dispositif de séparation est installé au fond de la mer, à une profondeur de 100 à 4 000 m et l'on établit une pression P2 de 10 à 50, de préférence 20 bar (20x10⁵ Pa) au sein desdits premier et seconds réservoirs, en baissant la pression à l'aide d'un dispositif de baisse de pression (14b) coopérant avec ladite conduite d'arrivée de fluide brut (2d) en amont dudit premier orifice inférieur du premier réservoir.

## Claims

1. A liquid/gas separator device for separating liquid and gaseous phases of a fluid, in particular liquid and gaseous phases of crude oil, the device comprising at least one vertically-disposed cigar-type first reservoir (2) of elongate shape of circular section with bottom and top ends that are, likewise preferably, in the form of partial spherical caps, wherein:
a) said first reservoir (2) comprises a wall fitted with:
· a first bottom orifice (2a) at its bottom end, connected to an arrival pipe (2d) for said fluid, and including a pressure-lowering device (14b) and preferably a fluid flow rate control valve (14c) upstream;
· at least one first top orifice (5a) at its top end; and
· a plurality of first intermediate orifices (4a); and
b) said first reservoir (2) is connected to a plurality of second reservoirs (3, 3a-3f) by a plurality of first transfer pipes (4), and to at least one second transfer pipe (5);
· said second reservoirs (3, 3a-3f) being likewise vertically-disposed, of cigar type, being elongate in shape and of circular section with bottom and top ends that are, likewise preferably, in the form of partial spherical caps;
c) each of said second reservoirs (3, 3a-3f) comprises:
· a second top orifice (3₃) at its top end, connected to a common gas discharge pipe (3l); and
· a second intermediate orifice (4b) disposed lower than said first intermediate orifice (4a), to which it is connected by an inclined said first transfer pipe (4), and a second bottom orifice (3₁) at its bottom end connected to a common degassed fluid discharge pipe (3d, 13a) including downstream an export pump (13c) suitable for drawing off said degassed fluid from the bottom ends of said second reservoirs; and
d) said first top orifice (5a) of said first reservoir (2) is connected via at least one second transfer pipe (5) to at least one third intermediate orifice (5b) in at least one of said second reservoirs (3a, 3a-3f), said third intermediate orifice (5b) being situated above said second intermediate orifice (4b) in the same said second reservoir.

2. A device according to claim 1, **characterized in that** it includes a monitoring device (6) for monitoring the level of fluid inside a said reservoir, preferably inside a said second reservoir, thereby serving to control a said fluid flow rate control valve (14c) upstream from said first bottom orifice of said first reservoir and/or a said degassed fluid export pump (13b) downstream from said second bottom orifices of said second reservoirs.

3. A device according to claim 1 or claim 2, **characterized in that** the length L1 of said first reservoir is greater than or equal to 10 times its diameter D1, preferably 15 to 30 times its diameter D1.

4. A device according to any one of claims 1 to 3, **characterized in that** the square of the diameter of said second reservoirs (D2)² is greater than or equal to (1/n)×(D1)², where n is the number of said second reservoirs and D1 is the diameter of said first reservoir.

5. A device according to any one of claims 1 to 4, **characterized in that** the diameter (D2) of said second reservoirs is less than the diameter (D1) of said first reservoir, and preferably the length (L2) of said second reservoirs is less than the length (L1) of said first reservoir.

6. A device according to any one of claims 1 to 5, **characterized in that** said first intermediate orifices (4a) of said first reservoir are situated respectively at a height H relative to the bottom end of said first reservoir that corresponds to one-fourth to one-half of the total length L1 of said first reservoir, and that is preferably about one-third thereof.

7. A device according to any one of claims 1 to 6, **characterized in that** it includes, inside said first reservoir and at the ends of said first transfer pipes (4), devices (15) for controlling the fluid transfer flow rate by head loss, preferably devices of the cyclone type having a tangential inlet (15a) substantially parallel to the axial direction (ZZ) of said first reservoir, and having an axial outlet substantially perpendicular on the axis (YY) of said first transfer pipes (4).

8. A device according to any one of claims 1 to 7, **characterized in that** it comprises a central first reservoir (2) surrounded by a plurality of said second reservoirs, preferably four to 12 of them, disposed vertically and distributed preferably in substantially regular manner circularly around said first reservoir (3a-3f).

9. A device according to any preceding claim, **characterized in that** said first transfer pipes (4) between said first reservoir (2) and said second reservoirs (3, 3a-3f) extend to the level of said second intermediate orifices (4b) in such a manner that the fluid flows initially by penetrating tangentially into the insides of the cylindrical walls of said second reservoirs.

10. A device according to any one of claims 1 to 9, **characterized in that**:
· the various said second bottom orifices (3₁) of said second reservoirs are connected to a bottom first manifold (1₁), preferably of toroidal shape, itself connected to a single liquid discharge pipe (3d) or to a single second pipe element (3d) connected thereto; and
· the various said second top orifices (3₃) of said second reservoirs (3) are connected to a common top second manifold (1₂), itself connected to a single gas discharge pipe (31) or to a single third pipe element (3i) connected thereto.

11. A device according to any one of claims 1 to 10, **characterized in that** the various first and second reservoirs are secured to a support structure including at least one frame (1a) disposed beneath said reservoirs and supporting automatic connector portions (2b, 3b, and 3j) connected to said first bottom orifice (2a), to said second bottom orifices (3₁), and to said second top orifices (3₃) or to ends of pipe elements (2a, 3₂, 3i) that are connected to said first bottom orifice and to said second bottom and top orifices.

12. A device according to any one of claims 1 to 11, **characterized in that** it is installed at the sea bottom (12), said fluid arrival pipe (2b) providing a connection between at least one well head (14) and said first bottom orifice of said first reservoir or a single first pipe element connected thereto (2a).

13. A device according to claim 12, **characterized in that** said liquid/gas separator device (1) is connected to a base (10) resting on the sea bottom (12), said base (10) preferably being anchored to the sea bottom by a suction anchor (11), said base supporting a series of male or female automatic connector portions (2c, 3h, 3k) located respectively at the ends of said fluid arrival pipe (2d), degassed liquid discharge pipe (3d), and gas discharge pipe (31), co-operating with complementary female or male, as the case may be automatic connector portions (2b, 3g, 3j) connected to said first and second bottom orifices (2a, 3₁) and to said second top orifices (3₃) or to the ends of said first, second, and third pipe elements (2a, 3₂, and 3i) providing connections with said first bottom orifice (2a), second bottom orifices (3₁). and said second top orifices (3₃), respectively.

14. A device according to claim 12 or claim 13, **characterized in that** said fluid discharge pipe (3d, 13a) co-operates with a said export pump (13b) inserted in a second well (13) formed in the sea bottom beside said suction anchor (11) of said base (10), said second well preferably being secured to said suction anchor.

15. A device according to any one of claims 12 to 14, **characterized in that** said reservoirs are thermally insulated by a common rigid thermally insulating enclosure (17) filled with sea water and in communication with the sea via at least one communication orifice, preferably with a sea water heater device (18) inside the enclosure, said communication orifice and said heater device (18) also preferably being situated in the bottom portion of the enclosure.

16. A method of separating the liquid and gaseous phases of a fluid with the help of a device according to any one of claims 1 to 15, the method being **characterized in that** it comprises the following steps:
1) sending crude oil via an arrival pipe (2d) to said first bottom orifice (2a) of said first reservoir; and
2) allowing the crude oil to rise within said first reservoir and fill it up to said first intermediate orifices (4a), and then flow in at least partially degassed form through said first transfer pipes (4) down towards the second bottom orifices (3₁) at the bottom ends of said second reservoirs (3); and
3) recovering from said at least one first top orifice (5a) the gas separated from said crude oil within said first reservoir, and where appropriate the only partially degassed liquid oil, that is conveyed by a said second transfer pipe (5) to at least the level of a third intermediate orifice (5a) within at least one said second reservoir (3); and
4) recovering the gas separated from said oil within said second reservoir, via said second top orifices (3₃), and then within a said gas discharge pipe (31); and
5) recovering the substantially degassed fluid or liquid from said second bottom orifices (3₁) of said second reservoirs, which is conveyed via a said liquid discharge pipe (3d) and taken to the surface or delivered to a liquid separator device so as to separate a plurality of liquid phases contained in said degassed fluid,
in particular for the purpose of separating the oil and the water from degassed crude oil, and where appropriate, separating a residue of gas still present in the incompletely degassed crude oil.

17. A method according to claim 16, **characterized in that** said crude oil is delivered to the bottom end of the said first reservoir at a reduced pressure P1 that is lower than the static pressure P2 at the sea bottom, preferably such that the pressure difference ΔP = P1-P0, where P0 is the pressure at the surface, is greater than the head losses in the gas discharge pipes (3l) from said second top orifices (3₃) to the surface.

18. A method according to claim 16 or claim 17, **characterized in that** the liquid from the degassed fluid is exported from the sea bottom to the surface with the help of a so-called export pump (13c).

19. A method according to any one of claims 16 to 18, **characterized in that** the arrival flow rate of the crude fluid upstream from said first reservoir is controlled by said flow rate control valve (14c), and/or the discharge rate of the degassed fluid downstream from the second reservoirs is controlled by the speed of said export pump (13c) as a function of measurements taken by at least one device (6) for monitoring fluid level within at least one said second reservoir.

20. A method according to claim 19, **characterized in that** monitoring the level of crude fluid within said second reservoir, preferably by means of a probe (6), enables an increase or a decrease to be imparted to the flow rate of the crude fluid arriving at the bottom end of the first reservoir by means of said flow rate control valve (14c), and/or enables a decrease or respectively an increase in the speed of the export pump (13c) drawing off the degassed fluid from the bottom ends of said second reservoirs to be imparted in the event that the level of fluid detected in said second reservoir is situated below the level of said second intermediate orifices (4b), or respectively above said third intermediate orifice (5b), or, preferably above said second intermediate orifices (4).

21. A method according to any one of claims 16 to 20, **characterized in that** said separator device is installed at the sea bottom, at a depth of 100 m to 4000 m, and a pressure P2 is established of 10 bars to 50 bars, and preferably of 20 bars (20×10⁵ Pa) within said first and second reservoirs, by lowering the pressure with the help of a pressure lowering device (14b) co-operating with said crude fluid arrival pipe (2d) upstream from said first bottom orifice of the first reservoir.

## Patentansprüche

1. Vorrichtung zur Flüssigkeit/Gas-Trennung von zwei Phasen, einer Flüssig- bzw. einer Gasphase eines Fluids, insbesondere der Flüssig- und der Gasphase eines Rohöls, umfassend wenigstens einen vertikal angeordneten ersten Behälter (2) langgestreckter Form mit kreisförmigem Querschnitt, dessen unteres und oberes Ende -weiterhin vorzugsweise- teilkugelkappenförmig, zigarrenartig ausgebildet sind, wobei
a) der erste Behälter (2) eine Wand umfaßt, die ausgestattet ist mit:
- einer ersten unteren Öffnung (2a) an seinem unteren Ende, welche mit einer Leitung zum Zuführen (2d) des Fluids verbunden ist und vorgeschaltet eine Druckminderungsvorrichtung (14b) und vorzugsweise ein Ventil zur Steuerung des Fluiddurchsatzes (14c) umfaßt,
- wenigstens eine erste obere Öffnung (5a) an seinem oberen Ende, sowie
- eine Vielzahl von ersten Zwischenöffnungen (4a), und
b) der erste Behälter (2) mit einer Vielzahl von zweiten Behältern (3, 3a-3f) über eine Vielzahl von ersten Transferleitungen (4) und wenigstens eine zweite Transferleitung (5) verbunden ist,
- die zweiten Behälter (3, 3a-3f) ebenfalls eine langgestreckte Form mit kreisförmigem Querschnitt, deren unteres und oberes Ende -weiterhin vorzugsweiseteilkugelkappenförmig, zigarrenartig ausgebildet sind, aufweisen und vertikal angeordnet sind,
c) die zweiten Behälter (3, 3a-3f) jeweils umfassen:
- eine zweite obere Öffnung (3₃) an ihrem oberen Ende, die mit einer gleichen Gasabführleitung (3l) verbunden ist, und
- eine zweite Zwischenöffnung (4b), die in bezug auf die erste Zwischenöffnung (4a), mit der sie über eine geneigte erste Transferleitung (4) verbunden ist, tieferliegend angeordnet ist, sowie, an seinem unteren Ende, eine mit einer gleichen Leitung zum Abführen von entgastem Fluid (3d, 13a) verbundene zweite untere Öffnung (3₁), die nachgeschaltet eine Exportpumpe (13c) umfaßt, welche geeignet ist, das entgaste Fluid am unteren Ende der zweiten Behälter abzuziehen,
und
d) die erste obere Öffnung (5a) des ersten Behälters (2) über wenigstens eine zweite Transferleitung (5) mit wenigstens einer dritten Zwischenöffnung (5b) von wenigstens einem zweiten Behälter (3, 3a-3f) verbunden ist, wobei die dritte Zwischenöffnung (5b) oberhalb der zweiten Zwischenöffnung (4b) des gleichen zweiten Behälters gelegen ist.

2. Vorrichtung nach Anspruch 1, **dadurch gekennzeichnet, daß** sie eine Vorrichtung zur Steuerung des Pegels des Fluids (6) innerhalb eines Behälters, vorzugsweise innerhalb eines zweiten Behälters umfaßt, die ermöglicht, ein Ventil zur Steuerung des Fluiddurchsatzes (14d) vor der ersten unteren Öffnung des ersten Behälters und/oder eine Exportpumpe für entgastes Fluid (13d) nach den zweiten unteren Öffnungen der zweiten Behälter zu steuern.

3. Vorrichtung nach Anspruch 1 oder 2, **dadurch gekennzeichnet, daß** die Länge L1 des ersten Behälters größer als das oder gleich dem 10-fache(n) seines Durchmessers D1, vorzugsweise das 15- bis 30-fache seines Durchmessers D1 ist.

4. Vorrichtung nach einem der Ansprüche 1 bis 3, **dadurch gekennzeichnet, daß** das Quadrat des Durchmessers der zweiten Behälter (D2)² größer oder gleich (1/n) x (D1)² ist, wobei n die Anzahl von zweiten Behältern und D1 der Durchmesser des ersten Behälters ist.

5. Vorrichtung nach einem der Ansprüche 1 bis 4, **dadurch gekennzeichnet, daß** der Durchmesser der zweiten Behälter (D2) kleiner als der Durchmesser des ersten Behälters (D1) ist und vorzugsweise die Länge der zweiten Behälter (L2) kleiner als die Länge des ersten Behälters (L1) ist.

6. Vorrichtung nach einem der Ansprüche 1 bis 5, **dadurch gekennzeichnet, daß** die ersten Zwischenöffnungen (4a) des ersten Behälters jeweils in einer Höhe H bezogen auf das untere Ende des ersten Behälters gelegen sind, die einer Höhe von 1/4 bis 1/2 der Gesamtlänge L1 des ersten Behälters und vorzugsweise etwa 1/3 entspricht.

7. Vorrichtung nach einem der Ansprüche 1 bis 6, **dadurch gekennzeichnet, daß** sie innerhalb des ersten Behälters am Ende der ersten Transferleitungen (4) Vorrichtungen zur Steuerung der Durchflußrate der Fluidübertragung durch Druckabfall (15), vorzugsweise vom Typ Zyklon mit tangentialem Einlaß (15a) im wesentlichen parallel zur axialen Richtung (ZZ) des ersten Behälters, und mit axialem Auslaß im wesentlichen senkrecht in der Achse (YY) der ersten Transferleitungen (4) umfaßt.

8. Vorrichtung nach einem der Ansprüche 1 bis 7, **dadurch gekennzeichnet, daß** sie einen ersten mittleren Behälter (2) umfaßt, der von einer Vielzahl von zweiten Behältern, vorzugsweise 4 bis 12 umgeben ist, die vertikal angeordnet sind und vorzugsweise im wesentlichen gleichmäßig und kreisförmig um den ersten Behälter herum verteilt sind (3a-3f).

9. Vorrichtung nach einem der vorhergehenden Ansprüche, **dadurch gekennzeichnet, daß** die ersten Transferleitungen (4) zwischen dem ersten Behälter (2) und den zweiten Behältern (3, 3a-3f) im Bereich der zweiten Zwischenöffnungen (4b) ankommen, so daß das Fluid anfangs dadurch strömt, daß es tangential innerhalb der zylindrischen Wand der zweiten Behälter ankommt.

10. Vorrichtung nach einem der Ansprüche 1 bis 9, **dadurch gekennzeichnet, daß**:
- die verschiedenen zweiten unteren Öffnungen (3₁) der zweiten Behälter mit einem ersten unteren, vorzugsweise ringförmigen Sammler (1₁) verbunden sind, der selbst mit einer einzigen Flüssigkeitsabführleitung (3m) oder einem einzigen, mit dieser verbundenen zweiten Leitungselement (3₂) verbunden ist, und
- die verschiedenen zweiten oberen Öffnungen (3₃) der zweiten Behälter (3) mit einem gleichen zweiten oberen Sammler (1₂) verbunden sind, der selbst mit einer einzigen Gasabführleitung (3l) oder einem einzigen, mit dieser verbundenen dritten Leitungselement (3i) verbunden ist.

11. Vorrichtung nach einem der Ansprüche 1 bis 10, **dadurch gekennzeichnet, daß** die verschiedenen ersten und zweiten Behälter mit einer Tragstruktur fest verbunden sind, die wenigstens ein Gestell (1 a) umfaßt, das unter den Behältern angeordnet ist und Teile von automatischen Verbindern (2b, 3g und 3j) trägt, welche an die erste untere Öffnung (2a) und die zweiten unteren (3₁) und oberen (3₃) Öffnungen oder an Enden von Leitungselementen (2a, 3₂, 3i) angeschlossen sind, welche mit der ersten unteren Öffnung sowie den zweiten unteren und oberen Öffnungen verbunden sind.

12. Vorrichtung nach einem der Ansprüche 1 bis 11, **dadurch gekennzeichnet, daß** sie am Meeresgrund (12) installiert ist, wobei die Fluidzuführleitung (2b) die Verbindung zwischen wenigstens einem Bohrlochkopf (14) und der ersten unteren Öffnung des ersten Behälters oder einem einzigen hiermit (2a) verbundenen ersten Leitungselement sicherstellt.

13. Vorrichtung nach Anspruch 12, **dadurch gekennzeichnet, daß** die Flüssigkeit/Gas-Trennvorrichtung (1) an einen auf dem Meeresgrund (12) aufliegenden Sockel (10) angeschlossen ist, wobei der Sockel (10) vorzugsweise durch einen Sauganker (11) am Meeresgrund verankert ist, wobei der Sockel eine Reihe von Einsteck- oder Aufnahmeteilen von automatischen Verbindern (2c, 3h, 3k) an den Enden der Fluidzuführleitung (2d), der Leitung zum Abführen von entgaster Flüssigkeit (3m) bzw. der Gasabführleitung (3l) trägt, die mit den ergänzenden Aufnahme- bzw. Einsteckteilen von automatischen Verbindern (2b, 3g, 3j), welche mit der ersten und den zweiten unteren Öffnungen (2a, 3₁) und zweiten oberen Öffnungen (3₃) oder mit den Enden des ersten, des zweiten und des dritten Leitungselements (2a, 3₂ und 3i) verbunden sind, zusammenwirken, wodurch die Verbindung mit der ersten unteren Öffnung (2a), den zweiten unteren Öffnungen (3₁) bzw. den zweiten oberen Öffnungen (3₃) sichergestellt wird.

14. Vorrichtung nach einem der Ansprüche 12 oder 13, **dadurch gekennzeichnet, daß** die Fluidabführleitung (3m, 13a) mit einer Exportpumpe (13b) zusammenwirkt, die in ein am Meeresgrund neben dem Sauganker (11) des Sockels (10) ausgebildetes zweites Bohrloch (13) eingeführt ist, wobei vorzugsweise das zweite Bohrloch mit dem Sauganker fest verbunden ist.

15. Vorrichtung nach einem der Ansprüche 12 bis 14, **dadurch gekennzeichnet, daß** die Behälter durch eine gleiche starre Wärmeisolationsumschließung (17), die mit Meerwasser gefüllt und über wenigstens eine Verbindungsöffnung mit dem Meer in Verbindung steht, wärmeisoliert sind, vorzugsweise mit einer Vorrichtung (18) zum Erhitzen des Meerwassers innerhalb der Umschließung, wobei die Verbindungsöffnung und die Erhitzungsvorrichtung (18) sich weiterhin vorzugsweise im unteren Teil der Umschließung befinden.

16. Verfahren zum Trennen der beiden Phasen, der flüssigen und der gasförmigen, eines Fluids mit Hilfe einer Vorrichtung nach einem der Ansprüche 1 bis 15, **dadurch gekennzeichnet, daß** die folgenden Schritte durchgeführt werden, bei denen:
1) das Rohöl mittels einer Zuführleitung (2d) bis zur ersten unteren Öffnung (2a) des ersten Behälters geleitet wird und
2) das Rohöl innerhalb des ersten Behälters steigt und diesen bis zu den ersten Zwischenöffnungen (4a) füllt, anschließend wenigstens teilweise entgast durch die ersten Transferleitungen (4) strömt, um zu den zweiten unteren Öffnungen (3₁) am unteren Ende der zweiten Behälter (3) nach unten zu gelangen, und
3) innerhalb des ersten Behälters von dem Rohöl abgetrenntes Gas, und gegebenenfalls nur teilweise entgastes flüssiges Rohöl, im Bereich wenigstens einer ersten oberen Öffnung (5a) aufgefangen wird, das über eine zweite Transferleitung (5) im Bereich wenigstens einer dritten Zwischenöffnung (5b) in wenigstens einen zweiten Behälter (3) geleitet wird, und
4) das von dem Rohöl innerhalb des zweiten Behälters abgetrennte Gas im Bereich der zweiten oberen Öffnungen (3₃), dann in einer Gasabführleitung (3l) aufgefangen wird, und
5) die (das) im wesentlichen entgaste Flüssigkeit oder Fluid im Bereich der zweiten unteren Öffnungen (3₁) der zweiten Behälter aufgefangen wird, die (das) mittels einer Flüssigkeitsabführleitung (3d) abtransportiert wird, welche bis zur Oberfläche hoch geführt ist, oder die (das) zu einer Flüssigtrennvorrichtung geleitet wird, um die Vielzahl von in dem entgasten Fluid enthaltenen Flüssigphasen abzutrennen, insbesondere um das Öl und das Wasser aus einem entgasten Rohöl sowie gegebenenfalls eine in einem unvollständig entgasten Rohöl noch vorhandene Gasrestmenge abzuscheiden.

17. Verfahren nach Anspruch 16, **dadurch gekennzeichnet, daß** das Rohöl zum unteren Ende des ersten Behälters mit einem verminderten Druck P1 geleitet wird, der niedriger als der statische Druck am Meeresgrund P2 ist, vorzugsweise derart, daß der Druckunterschied ΔP = P1-P0, wobei P0 der Druck an der Oberfläche ist, größer als die Druckverluste in den Leitungen zum Abführen von Gas (3l) von den zweiten oberen Öffnungen (3₃) bis zur Oberfläche ist.

18. Verfahren nach einem der Ansprüche 16 oder 17, **dadurch gekennzeichnet, daß** die Flüssigkeit von entgastem Fluid mit Hilfe einer Exportpumpe (13c) vom Meeresgrund bis zur Oberfläche abgeführt wird.

19. Verfahren nach einem der Ansprüche 16 bis 18, **dadurch gekennzeichnet, daß** die Zuführmenge an Rohfluid vor dem ersten Behälter über das Durchflußsteuerventil (14c) gesteuert wird und/oder die Abführmenge an entgastem Fluid nach den zweiten Behältern über die Geschwindigkeit der Exportpumpe (13c), in Abhängigkeit der Messungen wenigstens einer Vorrichtung zur Steuerung des Fluidpegels (6) innerhalb wenigstens eines zweiten Behälters gesteuert wird.

20. Verfahren nach Anspruch 19, **dadurch gekennzeichnet, daß** die Steuerung des Rohfluidpegels innerhalb des zweiten Behälters, vorzugsweise eine Sonde (6), ermöglicht, die Erhöhung oder Verringerung der am unteren Ende des ersten Behälters ankommenden Rohfluidmenge im Bereich des Durchflußsteuerventils (14c) zu steuern und/oder die Verringerung bzw. die Erhöhung der Geschwindigkeit der Exportpumpe (13c), welche das entgaste Fluid am unteren Ende der zweiten Behälter abzieht, zu steuern, falls der erfaßte Fluidpegel in dem zweiten Behälter unterhalb der Höhe der zweiten Zwischenöffnungen (4b) bzw. oberhalb der dritten Zwischenöffnung (5b) oder, vorzugsweise, oberhalb der zweiten Zwischenöffnungen (4b) liegt.

21. Verfahren nach einem der Ansprüche 16 bis 20, **dadurch gekennzeichnet, daß** die Trennvorrichtung am Meeresgrund in einer Tiefe von 100 bis 4.000 m installiert ist und ein Druck P2 von 10 bis 50, vorzugsweise 20 bar (20 x 10⁵ Pa) innerhalb des ersten und der zweiten Behälter dadurch eingestellt wird, daß der Druck mit Hilfe einer Druckminderungsvorrichtung (14b), die mit der Rohfluidzuführleitung (2d) zusammenwirkt, vor der ersten unteren Öffnung des ersten Behälters gesenkt wird.
